# EUROPÄISCHE PATENTSCHRIFT

(11) **EP 0 669 351 B1**
(45) Veröffentlichungstag und Bekanntmachung des Hinweises auf die Patenterteilung: **13.01.1999**
(21) Anmeldenummer: 95101907.4
(22) Anmeldetag: 13.02.1995
(51) Int. Cl.: C08G 18/64, C08G 18/62, C08G 18/42, C08G 18/40, C08G 18/79, C08G 18/80, C09D 175/04, C09D 5/46

(54) **Pulverlack und seine Verwendung**
Powder lacquer and its use
Vernis en poudre et son utilisation

(30) Priorität: 25.02.1994 DE 4406157
(43) Veröffentlichungstag der Anmeldung: 30.08.1995
(73) Patentinhaber: BAYER AG, 51368 Leverkusen (DE)
(72) Erfinder: Halpaap, Reinhard, Dr., D-51519 Odenthal (DE); Meier-Westhues, Hans-Ulrich, Dr., D-51379 Leverkusen (DE); Wamprecht, Christian, Dr., D-41472 Neuss (DE); Bock, Manfred, Dr., D-51375 Leverkusen (DE); Schultz, Wolfgang, D-47829 Krefeld (DE); Kahl, Lothar, Dr., D-51465 Bergisch Gladbach (DE)

(56) Entgegenhaltungen:
- EP-A- 0 013 880
- EP-A- 0 409 301
- NL-A- 9 201 868
- US-A- 3 993 849

## Beschreibung

Die Erfindung betrifft neue Pulverlacke auf Basis von unterhalb 30°C festen und oberhalb 120°C flüssigen Bindemittelkombinationen aus A1) Lackpolyisocyanaten einer NCO-Funktionalität von mindestens 2,1 mit (cyclo)aliphatischen, an primäre oder sekundäre Kohlenstoffatome gebundenen freien Isocyanatgruppen und A2) organischen Polyhydroxylverbindungen, insbesondere Polyhydroxypolyurethanen, sowie die Verwendung dieser Pulverlacke zur Beschichtung beliebiger hitzeresistenter Substrate, insbesondere als Automobilklarlack.

Bei Raumtemperatur feste Kombinationen aus organischen Polyhydroxylverbindungen und blockierten Polyisocyanaten stellen wertvolle Bindemittel für Hitzevernetzbare Polyurethan-Pulverlacke dar (vgl. z.B. DE-OS 2 105 777, DE-OS 2 542 191, DE-OS 2 735 497, DE-OS 2 801 126, DE-OS 2 812 252, DE-OS 2 946 085, DE-OS 3 143 060, DE-OS 3 434 881, EP-A-0 009 694, EP-A-0 218 040, EP-A-0 286 799, EP-A-0 403 779, EP-A-0 409 745, EP-A-0 460 963, WO 91/15 532, US-PS 3 857 818 und US-PS 4 375 539). Den Systemen dieser Vorveröffentlichungen gemeinsam ist der Nachteil, daß bei der thermischen Vernetzung die als Blockierungsmittel eingesetzten Verbindungen abgespalten werden und in die Umwelt entweichen. Bei ihrer Verarbeitung müssen daher aus Gründen der Ökologie und Arbeitshygiene besondere Vorkehrungen zur Reinigung der Abluft und/oder Wiedergewinnung des Blockierungsmittels getroffen werden.

Ein Versuch, diesen prinzipiellen Nachteil zu beseitigen, ist in der Verwendung von Blockierungsmittel-freien, linearen Uretdion- und Urethangruppen-haltigen IPDI-Pulverlackhärtern zu sehen, die endständig freie Isocyanatgruppen, Urethan- oder Harnstoffgruppen aufweisen (EP-A-0 045 994, EP-A-0 045 996 und EP-A-0 045 998) und bei denen die Vernetzung unter thermischer Rückspaltung der Uretdiongruppen erfolgt. Als nachteilig erweist sich bei diesen Vernetzern jedoch ihre strikte Linearität, die für das Syntheseverfahren erforderlich ist, und die eine Verzweigung des Lacks zur Einstellung einer guten Lösemittelfestigkeit, Kratzfestigkeit und hohen Härte durch Variation des Härters nicht erlaubt.

In einigen Fällen sind auch bereits Polyisocyanate mit freien Isocyanatgruppen als Vernetzer für Polyurethanpulverlacke eingesetzt worden.

So werden in der bereits genannten EP-A-0 009 694 feste Härter aus Basis von teiltrimerisiertem IPDI beschrieben, die neben blockierten Isocyanatgruppen auch freie Isocyanatgruppen aufweisen. In den dort beschriebenen Fällen ist jedoch immer der Anteil blockierter Isocyanatgruppen größer als der Anteil freier Isocyanatgruppen, so daß eine Gefahr der vorzeitigen Vernetzung bei Lagerung oder beim homogenen Vermischen mit den Hydroxylgruppen-haltigen Harzen, gegebenenfalls Pigmenten und Zusatzstoffen, im Extruder bei Temperaturen von ca. 100 bis 120°C nicht gegeben ist.

Auch die EP-0 023 626 B1 beschreibt Polyisocyanate als Pulverlackhärter, die neben ε-Caprolactam-blockierten auch freie Isocyanatgruppen aufweisen. Diese Produkte basieren auf monomerenarmem, gedünnschichtetem IPDI-Trimerisat mit nur geringen Gehalten und einer niedrigen Funktionalität (≤ 1) an freien Isocyanatgruppen. Eine vorzeitige Vernetzung mit den OH-Komponenten im Extruder ist auch hier ausgeschlossen.

Entsprechend der ebenfalls obengenannten EP-A-0 045 994 werden als Pulverlackhärter Polyuretdione des IPDI verwendet, die endständig freie Isocyanatgruppen aufweisen. Diese freien NCO-Gruppen reagieren jedoch beim Homogenisieren im Extruder bei 100 bis 130°C mit den Hydroxylgruppen-haltigen Harzen vollständig ab (EP-A-0 045 994, Seite 20, Zeile 13).

Nach diesen Veröffentlichungen scheint es ausgeschlossen zu sein, lagerstabile Pulverlacke zu formulieren, die ausschließlich freie Isocyanatgruppen und Hydroxylgruppen zur Vernetzung tragen.

Auch in der EP-A-0 071 812 wurde schon vorgeschlagen, unblockierte Polyisocyanate als Pulverlackvernetzer einzusetzen, jedoch erfolgt gemäß der Lehre dieser Veröffentlichung die Vernetzung über eine NCO/Epoxid-Reaktion, wobei die Gegenwart freier Hydroxylgruppen zwingend ausgeschlossen werden muß, da sonst schon beim Mischen und Extrudieren der Komponenten Vernetzung und Gelierung eintreten würde. Auch diese Vorveröffentlichung schließt lagerstabile Pulverlacke mit freien Isocyanatgruppen neben Hydroxylgruppen aus.

Die EP-A-0 193 828, EP-A-0 224 165 und EP-A-0 254 152 beschreiben spezielle bei Raumtemperatur feste, Isocyanurat- und/oder Urethangruppen-haltige Polyisocyanate mit freien, an tertiäre (cyclo)aliphatische Kohlenstoffatome gebundenen Isocyanatgruppen auf Vernetzerkomponenten für PUR-Pulverlacke. Aufgrund der Reaktionsträgheit der tertiär gebundenen NCO-Gruppen lassen sich diese Polyisocyanate in unblockierter Form mit OH-funktionellen Pulverlackbindemitteln bei Temperaturen oberhalb ihres Schmelzpunktes vermischen, ohne daß eine unerwünschte Vorreaktion eintritt. Die aus diesen Polyisocyanaten formulierten Pulverlacke ergeben beim Einbrennen bei 150 bis 220°C, vorzugsweise bei 170 bis 190°C, hochvernetzte glänzende Lackfilme mit guter Härte, Elastizität und Lösemittelbeständigkeit.

In der DE-OS 2 359 538 werden Pulveranstrichmittel auf Basis von organischen Polyisocyanaten mit freien Isocyanatgruppen und Hydroxylgruppen aufweisenden Polyacrylat- oder Polyesterharzen beschrieben, die durch Vermischen der Bindemittelkomponenten in der Schmelze hergestellt werden. In den Ausführungsbeispielen werden jedoch ausschließlich lineare Diisocyanate und Polyhydroxylverbindungen mit primären Hydroxylgruppen verwendet, so daß davon ausgegangen werden muß, daß es sich bei den Bindemitteln dieser Pulverlacke nicht um erst auf dem Substrat unter Vernetzung ausreagierende Reaktivgemische sondern um bereits vor ihrer Applikation ausreagierte, wegen der Linearität der Diisocyanate noch thermoplastische Polyurethane handelt, es sei denn, eine weiterführende Vernetzung wird durch den gleichzeitigen Einbau von Epoxidgruppen und deren Vernetzung über Dicarbonsäuren erreicht, wie dies in Beispiel 1 der Vorveröffentlichung gezeigt wird.

Im Bestreben, die Lösemittelemissionen aus Beschichtungsmitteln weiter zu reduzieren, wird heute auch für eine Reihe von Anwendungen, die bislang noch konventionellen lösemittelhaltigen oder wäßrigen Lacksystemen vorbehalten sind, beispielsweise für die Automobilerstlackierung, der Einsatz von Pulverlacken diskutiert. Dabei besteht insbesondere ein Bedarf an Pulverlacksystemen, die unterhalb 160°C, bevorzugt im Bereich von ca. 140°C, ohne Abspaltung von Blockierungsmitteln aushärtbar sind und gleichwohl zu hochvernetzten, lösemittelfesten und elastischen Beschichtungen führen.

Diesen Anforderungen an eine Einbrenntemperatur um 140°C und eine hohe Vernetzungsdichte können die bekannten PUR-Pulverlackharze mit den oben beschriebenen abspalterfreien Härtern nicht genügen. Die Urethangruppen- und Uretdiongruppen-haltigen Härter des Standes der Technik haben eine zu geringe Funktionalität, um hochvernetzte Lackfilme auszubilden, während die Härter mit tert. gebundenen NCO-Gruppen zwar hochverzweigt eingestellt werden können, aber ebenso wie die Uretdionhärter bezüglich ihrer Reaktivität die gestellten Anforderungen an eine niedrigere Einbrenntemperatur nicht erfüllen.

Es war daher die der vorliegenden Erfindung zugrundeliegende Aufgabe, neue Pulverlackharze zur Verfügung zu stellen, die eine hohe Reaktivität aufweisen und sich ohne Abspaltung von Blockierungsmitteln zu hochvernetzten, lösemittelfesten, elastischen Lackfilmen aushärten lassen.

Diese Aufgabe konnte mit der Bereitstellung der nachstehend näher beschriebenen Pulverlacke gelöst werden, deren wesentliche Bindemittelkomponente aus einem Gemisch an sich bekannter fester Polyisocyanate mit freien Isocyanatgruppen, die an primäre und/oder sekundäre Kohlenstoffatome gebunden sind, und speziellen Polyolkomponenten mit freien OH-Gruppen besteht.

Die nachfolgend näher beschriebenen Pulverlackharze basieren auf der überraschenden Beobachtung, daß als PUR-Pulverlackhärter auch ganz "normale" an sich bekannte, verzweigte, feste Polyisocyanate mit an primäre und/oder sekundäre Kohlenstoffatome gebundenen NCO-Gruppen Verwendung finden können, wenn nur die verwendeten Polyole an sekundäre und/oder tertiäre Kohlenstoffatome gebundene OH-Gruppen aufweisen. Diese Tatsache war ganz und gar nicht zu erwarten, da nach dem vorliegenden Stand der Technik, freie primär und/oder sekundär gebundene NCO-Gruppen wie oben erläutert bei der Verwendung in PUR-Pulverlacken regelmäßig mit vorhandenen freien OH-Gruppen im Extruder bei Herstellung des Pulverlacks schon abreagierten.

Gegenstand der Erfindung ist ein Pulverlack zur Herstellung von vergilbungsfreien elastischen Beschichtungen aus
A) einem unterhalb 30°C festen und oberhalb 120°C flüssigen Bindemittelgemisch aus
   A1) einer Polyisocyanatkomponente, bestehend aus mindestens einem Lackpolyisocyanat mit freien, an primäre und/oder sekundäre Kohlenstoffatome gebundenen Isocyanatgruppen und
   A2) einer Polyolkomponente,
   wobei das Bindemittelgemisch durch Abmischen der Einzelkomponenten unter Einhaltung eines Äquivalentverhältnisses von Isocyanatgruppen zu Hydroxylgruppen von 0,6:1 bis 1,2:1, gegebenenfalls unter kurzzeitigem Erhitzen, hergestellt worden ist,
gegebenenfalls
B) Katalysatoren für die Reaktion zwischen Hydroxyl- und Isocyanatgruppen
und gegebenenfalls
C) aus der Pulverlacktechnologie bekannten Hilfs- und Zusatzmitteln,
dadurch gekennzeichnet, daß
die Polyisocyanatkomponente A1) einen NCO-Gehalt von 5,0 bis 23 Gew.-% bei einer mittleren NCO-Funktionalität von mindestens 2,1 und einem Gehalt an monomeren Diisocyanaten eines unter 300 liegenden Molekulargewichts von unter 0,5 Gew.-% aufweist und
die Polyolkomponente A2) aus mindestens einer Polyhydroxylverbindung, ausgewählt aus der Gruppe bestehend aus Polyhydroxypolyurethanen, Polyhydroxypolyacrylaten und Polyhydroxypolyestern, jeweils mit einer OH-Zahl von 30 bis 200, besteht, wobei die in der Komponente A2) vorliegenden Hydroxylgruppen zu mindestens 50 % an sekundäre oder tertiäre Kohlenstoffatome gebunden sind.

Gegenstand der Erfindung ist auch die Verwendung dieser Pulverlacke zur Beschichtung beliebiger hitzeresistenter Substrate nach den Methoden der Pulverlacktechnologie, insbesondere als Automobilklarlack.

Das erfindungsgemäß zum Einsatz gelangende Bindemittelgemisch aus Al) und A2) wird durch Abmischen der Einzelkomponenten, gegebenenfalls unter kurzzeitigem Erhitzen hergestellt. Hierbei kann nicht völlig ausgeschlossen werden, daß eine NCO/OH-Additionsreaktion in untergeordnetem Umfang stattfindet. Die Angabe "bestehend im wesentlichen aus" soll daher bedeuten, daß es sich bei dem Bindemittelgemisch um ein Gemisch aus den Komponenten Al) und A2) handelt, in welchem gegebenenfalls auch noch Reaktionsprodukte dieser Komponenten vorliegen. Die Gesamtmenge dieser Reaktionsprodukte entspricht jedoch maximal einer Reaktion von 30% der ursprünglich in der eingesetzten Polyisocyanatkomponente A1) vorliegenden NCO-Gruppen.

Bei der Polyisocyanatkomponente A1) handelt es sich um an sich bekannte monomerenarme Lackpolyisocyanate mit einem Gehalt an an primäre oder sekundäre aliphatische Kohlenstoffatome gebundenen freien Isocyanatgruppen von 5 bis 23, vorzugsweise 12 bis 18 Gew.-%, einer mittleren NCO-Funktionalität von mindestens 2,1, vorzugsweise mindestens 2,4 und besonders bevorzugt mindestens 3,0 und einem Gehalt an monomeren Diisocyanaten mit einem unter 300 liegenden Molekulargewicht von maximal 0,5, vorzugsweise maximal 0,3 Gew.-%. Die Polyisocyanatkomponente Al) weist vorzugsweise einen zwischen 30°C und 120°C liegenden Schmelzpunkt bzw. -bereich auf, jedoch ist dies keine zwingende Bedingung, da es lediglich darauf ankommt, daß das Gemisch aus den Komponenten A1) und A2) unterhalb 30°C fest und oberhalb 120°C flüssig ist. Dieser Bedingung können auch Kombinationen aus flüssigen Polyisocyanaten und festen Polyhydroxylverbindungen entsprechen.

Die Polyisocyanatkomponente A1) besteht vorzugsweise aus an sich bekannten, diesen Bedingungen entsprechenden, Urethangruppen und insbesondere Isocyanuratgruppen aufweisenden Lackpolyisocyanaten.

Geeignete Isocyanuratgruppen aufweisende Polyisocyanate können beispielsweise wie in EP-A-0 003 765, EP-A-0 010 589, EP-A-0 017 998, EP-A-0 047 452, EP-A-0 187 105, EP-A-0 197 864, EP-A-0 330 966 beschrieben hergestellt werden. Urethangruppen-modifizierte Polyisocyanate werden beispielsweise durch Umsetzung aliphatischer Diisocyanate mit beliebigen, mehrwertigen aliphatischen oder cycloaliphatischen gegebenenfalls Ethergruppen oder Estergruppen aufweisenden, mehrwertigen Alkoholen des Molekulargewichtsbereichs 62 bis 1000 unter Einhaltung eines NCO/OH-Äquivalentverhältnisses von >2, vorzugsweise von 3:1 bis 15:1, insbesondere von 3:1 bis 7:1 bei Temperaturen von im allgemeinen 60 bis 120°C erhalten. Die Entfernung des überschüssigen monomeren Diisocyanats kann destillativ oder extraktiv erfolgen, wobei vorzugsweise das monomere Ausgangsdiisocyanat mittels einer Dünnschichtdestillationsapparatur innerhalb des Temperaturbereichs von 140 bis 200°C bei einem Druck zwischen 0,1 und 0,5 mbar abgetrennt wird, so daß 100 % Festkörper enthaltende Polyisocyanate A1) mit dem angegebenen maximalen Monomergehalt von ≤0,5 Gew.-%, vorzugsweise ≤0,3 Gew.-% erhalten werden.

Erfindungsgemäß als Komponente A1) geeignet sind ebenfalls den obigen Bedingungen entsprechende Lackpolyisocyanate, die sowohl Urethan- als auch Isocyanuratgruppen enthalten. Ebenfalls geeignet sind solche den obengenannten Bedingungen entsprechende Lackpolyisocyanate, die sowohl Allophanat- als auch Isocyanuratgruppen aufweisen, wie sie beispielsweise gemäß deutscher Patentanmeldung P 43 35 796.2 erhalten werden können.

Ausgangsdiisocyanate zur Herstellung der Polyisocyanate A1) sind aliphatische Diisocyanate des Molekulargewichtsbereichs 140 bis 300, wobei 1-Isocyanato-3,3,5-trimethyl-5-isocyanatomethylcyclohexan (IPDI), 4,4,-Diisocyanatodicyclohexylmethan (HMDI) und deren Gemische mit 1,6-Diisocyanatohexan (HDI) bevorzugt sind. Die zur Herstellung der Lackpolyisocyanate Al) eingesetzten Ausgangsdiisocyanate können gegebenenfalls Gemische darstellen und bestehen besonders bevorzugt zu 70 bis 100 Gew.-% aus IPDI und/oder HMDI und zu 0 bis 30 Gew.-% aus HDI. Auch Abmischungen entsprechender Zusammensetzung von IPDI- und HMDI-Homotrimerisaten mit HDI-Homotrimerisaten sind als Komponente A1) geeignet.

Die gegebenenfalls zur Urethanmodifizierung eingesetzten mehrwertigen aliphatischen Alkohole sind z.B.: Ethylenglykol, 1,2- und 1,3-Dihydroxypropan, 1,2-, 2,3- und 1,4-Dihydroxybutan, 1,6-Dihydroxyhexan, Diethylenglykol, Triethylenglykol, Dipropylenglykol, Neopentylglykol, 2,2,4-Trimethyl-1,3-dihydroxypentan, Cyclohexandimethanol, Glycerin, Trimethylolethan, Trimethylolpropan, Pentaerythrit oder beliebige Gemische derartiger mehrwertiger Alkohole. Auch geeignet aber weniger bevorzugt sind die später unter (a2) beschriebenen Estergruppen aufweisenden mehrwertigen Alkohole.

Die Hydroxylgruppen der Polyolkomponente A2) bestehen zu mindestens 50, vorzugsweise mindestens 70 und besonders bevorzugt zu 90 bis 100 % aus an sekundäre und/oder tertiäre Kohlenstoffatome gebundenen Hydroxylgruppen und im übrigen, d.h. bis maximal 50 %, vorzugsweise bis maximal 30 % und besonders bevorzugt bis maximal 10 % aus an primäre Kohlenstoffatome gebundenen alkoholischen Hydroxylgruppen. Die Polyolkomponente A2) weist im übrigen eine OH-Zahl von 30 bis 200, vorzugsweise 40 bis 150 mg KOH/g und eine nach der Differentialthermoanalyse (DTA) bestimmte Glasübergangstemperatur Tg von 30 bis 120, vorzugsweise 40 bis 100°C auf.

Als Polyolkomponenten A2) sind Polyhydroxypolyurethane A2a), die vorzugsweise Verwendung finden, Polyhydroxypolyacrylate A2b) oder Polyhydroxypolyester A2c) geeignet, sofern sie den obengenannten Bedingungen entsprechen.

Die Polyhydroxypolyurethane A2a) werden durch Umsetzung von urethangruppenfreien Polyolen (a) mit Diisocyanaten (b) unter Einhaltung eines OH/NCO-Äquivalentverhältnisses von 1,1:1 bis 10:1, bevorzugt von 1,2:1 bis 2:1, besonders bevorzugt von 1,3:1 bis 1,8:1, bei Temperaturen von im allgemeinen 40 bis 200°C, bevorzugt von 60 bis 160°C, erhalten, mit der Maßgabe, daß das Äquivalentverhältnis von primär gebundenen OH-Gruppen in den Ausgangspolyolen (a) zu NCO-Gruppen der Diisocyanate (b) OHₚᵣᵢₘ/NCO ≤1 ist.

Zum Aufbau der Polyhydroxypolyurethane A2a) geeignete Polyole (a) sind:
(a1) aliphatische oder cycloaliphatische gegebenenfalls Ethergruppen aufweisende mehrwertige Alkohole des Molekulargewichtsbereichs 62 bis 400, vorzugsweise 76 bis 261,
(a2) Estergruppen aufweisende Polyhydroxylverbindungen eines mittleren, aus Funktionalität und OH-Zahl berechenbaren Molekulargewichtes von 134 bis 2000, vorzugsweise von 176 bis 1500, und einer mittleren OH-Funktionalität von 2,0 bis 4,0
und gegebenenfalls, aber weniger bevorzugt
(a3) weiteren Estergruppen aufweisenden Polyhydroxylverbindungen eines mittleren, aus Funktionalität und OH-Zahl berechenbaren Molekulargewichtes oberhalb 2000 bis 10000, vorzugsweise bis 5000 und OH-Zahlen zwischen 20 und 200, vorzugsweise zwischen 40 und 160.

Zum Einbau der sekundär und/oder tertiär gebundenen OH-Gruppen werden in der Regel Polyole der Gruppe (a1) verwendet. Geeignet sind z.B. 1,2-Propandiol, 1,2-, 1,3-, 2,3-Butandiol, 3-Methyl-1,3-butandiol, 2,5-Hexandiol, 2-Methyl-2,4-pentandiol, 1,2-Octandiol, 2-Ethyl-1,3-hexandiol, 2,5-Dimethyl-2,5-hexandiol, 2,2,4-Trimethyl-1,3-pentandiol, 1,2-Hexadecandiol, 1,12-Octadecandiol, 1,2-, 1,4-Cyclohexandiol, 2,2,4,4-Tetramethyl-1,3-cyclobutandiol, 2,2-Bis-(4-hydroxycyclohexyl)-propan, Glycerin und 1,2,6-Hexantriol.

Als weitere Polyole der Gruppe (a1) können gegebenenfalls auch Polyole mit ausschließlich primär gebundenen OH-Gruppen mitverwendet werden, falls überhaupt jedoch in der Regel in untergeordneten Anteilen. Geeignet hierfür sind z.B. 1,2-Ethandiol, 1,3-Propandiol, 1,4-Butandiol, 1,6-Hexandiol, Diethylenglykol, Triethylenglykol, Dipropylenglykol, Neopentylglykol, Cyclohexandimethanol, 1,1,1-Trimethylolethan, 1,1,1-Trimethylolpropan, Pentaerythrit oder 1,3,5-Tris(2-hydroxyethyl)isocyanurat.

Bei den zur Herstellung der Polyhydroxypolyurethane A2a) verwendeten Estergruppen aufweisenden Polyhdroxylverbindungen (a2) handelt es sich um an sich bekannte Esteralkohole oder Esteralkohol-Gemische, wie sie beispielsweise durch Umsetzung von mehrwertigen Alkoholen mit unterschüssigen Mengen an mehrwertigen Carbonsäuren, entsprechenden Carbonsäureanhydriden, entsprechenden Polycarbonsäureestern von niederen Alkoholen oder durch Umsetzung von mehrwertigen Alkoholen mit Lactonen herstellen lassen.

Zur Herstellung der Esteralkohole (a2) geeignete mehrwertige Alkohole sind insbesondere solche des Molekulargewichtsbereichs 62 bis 400, wie sie unter Punkt (al) beispielhaft aufgeführt wurden, und wobei solche Einschränkungen bezüglich primär, sekundär oder tertiär gebundenen OH-Gruppen gelten, daß die letztendlich erhaltenen Polyhydroxypolyurethane A2a) den erforderlichen Gehalt an sekundär und/oder tertiär gebundenen Hydroxylgruppen aufweisen.

Die zur Herstellung der Esteralkohole verwendeten Säuren oder Säurederivate können aliphatischer, cycloaliphatischer, aromatischer und/oder heteroaroamtischer Natur sein und gegebenenfalls, z.B. durch Halogenatome, substituiert und/oder ungesättigt sein. Beispiele geeigneter Säuren sind beispielsweise mehrwertige Carbonsäuren des Molekulargewichtsbereichs 118 bis 300 oder deren Derivate wie beispielsweise Bernsteinsäure, Adipinsäure, Sebacinsäure, Phthalsäure, Isophthalsäure, Trimellithsäure, Phthalsäureanhydrid, Tetrahydrophthalsäure, Maleinsäure, Maleinsäureanhydrid, dimere und trimere Fettsäuren, Terephthalsäuredimethylester und Terephthalsäure-bis-glykolester.

Zur Herstellung der Esteralkohole können auch beliebige Gemische der beispielhaft genannten Ausgangsverbindungen eingesetzt werden. Ihre Herstellung wird z.B. in Houben-Weyl, XIV/2, S. 1-46 beschrieben.

Bevorzugt kommen beim erfindungsgemäßen Verfahren zur Herstellung der Polyhydroxypolyurethane A2a) als Ausgangskomponente (a2) jedoch auch Esterpolyole zum Einsatz, wie sie in an sich bekannter Weise aus Lactonen und einfachen mehrwertigen Alkoholen als Startermolekülen unter Ringöffnung herstellen lassen, vorausgesetzt, es werden ausreichende Mengen an Aufbaukomponenten mit sekundär und/oder tertiär gebundenen Hydroxylgruppen mitverwendet, um den diesbezüglichen erfindungswesentlichen Bedingungen zu entsprechen.

Geeignete Lactone zur Herstellung dieser Esterpolyole sind beispielsweise β-Propiolacton, γ-Butyrolacton, γ- und δ-Valerolacton, ε-Caprolacton, 3,5,5- und 3,3,5-Trimethylcaprolacton oder beliebige Gemische solcher Lactone. Als Startermoleküle dienen beispielsweise die oben beispielhaft genannten mehrwertigen Alkohole (a1) des Molekulargewichtsbereichs 62 bis 400 oder beliebige Gemische dieser Alkohole. Die Herstellung der bevorzugten Esterpolyole erfolgt im allgemeinen in Gegenwart von Katalysatoren wie beispielsweise Lewis- oder Brönstedt-Säuren, organischen Zinn- oder Titanverbindungen bei Temperaturen von 20 bis 200°C, vorzugsweise 50 bis 160°C.

Die gegebenenfalls zur Herstellung der Polyhydroxypolyurethane A2a) auch einsetzbaren Estergruppen aufweisenden Polyhydroxylverbindungen (a3) eines höheren Molgewichtsbereichs werden wie unter (a2) beschrieben aus prinzipiell den gleichen genannten Ausgangsverbindungen hergestellt.

Bevorzugte Komponenten (a1) sind 1,2-Propandiol, 2-Methyl-2,4-pentandiol, 2-Ethyl-1,3-hexandiol und 2,2,4-Trimethyl-1,3-pentandiol.

Bevorzugte Komponenten (a2) sind solche auf Basis von 1,6-Hexandiol, 1,1,1-Trimethylolpropan und ε-Caprolacton, Isophthalsäure, Phthalsäureanhydrid, Tetrahydrophthalsäure, Maleinsäureanhydrid und Adipinsäure.

Komponenten (a3) werden, wenn überhaupt, nur in untergeordneten Mengen mitverwendet und nicht bevorzugt.

Zum Aufbau der Polyhydroxypolyurethane A2a) geeignete Diisocyanate (b) sind grundsätzlich solche des Molekulargewichtsbereichs 140 bis 300 mit (cyclo)aliphatisch gebundenen Isocyanatgruppen, wie z.B. 1,4-Diisocyanatobutan, 1,6-Diisocyanatohexan (HDI), 2-Methyl-1,5-diisocyanatopentan, 2,2-Dimethyl-1,5-diisocyanatopentan, 2,2,4- bzw. 2,4,4-Trimethyl-1,6-diisocyanatohexan, 1,10-Diisocyanatodecan, 1,3- und 1,4-Diisocyanatocyclohexan, 2- bzw. 4-Methyl-1,3-diisocyanatocyclohexan, 1,3- bzw. 1,4-Bis-(2-isocyanatoprop-2-yl)benzol, 1-Isocyanato-3,3,5-trimethyl-5-isocyanatomethyl-cyclohexan (IPDI) und 4,4'-Diisocyanatodicyclohexylmethan (HMDI).

Bevorzugt eingesetzte Diisocyanate (b) sind HDI, IPDI und HMDI, wobei letzteres ganz besonders bevorzugt ist.

Zur Herstellung der Polyhydroxypolyurethane A2a) können beliebige Gemische an Polyolen (a) mit beliebigen Gemischen an Diisocyanaten (b) umgesetzt werden. In der Regel werden die Polyole (a) als Gemische, ausgewählt aus der Gruppe der Polyole (a1) und der Estergruppen aufweisenden Polyole (a2), gegebenenfalls auch (a3), eingesetzt, wobei die Zusammensetzung so gewählt wird, daß die obengenannten Bedingungen des OH/NCO-Verhältnisses und des OH_{prim.}/NCO-Verhältnisses eingehalten werden.

Für die erfindungsgemäße Herstellung der Polyhydroxypolyurethane A2a) geeignete Gemische an Polyolen (a) resultieren beispielsweise auch dann, wenn die als Ausgangsmaterial eingesetzten mehrwertigen Alkohole (a1) der beispielhaft genannten Art mit unterschüssigen Mengen an Säuren bzw. Säurederivaten der beispielhaft genannten Art nur teilweise in Esteralkohole (a2) überführt werden.

Die Ausgangsmaterialien (a) und (b) werden neben den genannten Einschränkungen außerdem so ausgewählt, daß Polyhydroxypolyurethane A2a) im Rahmen des oben für die Polyolkomponenten A2) genannten OH-Zahlbereichs als bei Raumtemperatur feste Harze mit den genannten Glasübergangstemperaturen Tg von 30 bis 120, vorzugsweise 40 bis 100°C entstehen.

Die Herstellung der erfindungsgemäß geeigneten Polyhydroxypolyurethane A2a) kann einstufig oder mehrstufig erfolgen. So kann die Gesamtmenge der eingesetzten Polyole (a) vorgelegt und mit den Diisocyanaten (b) umgesetzt werden. Man kann aber auch z.B. mit einer Teilmenge der Polyole (a1) die Diisocyanate (b) unter milden Reaktionsbedingungen zu sek./tert.-OH- und NCO-Gruppen-haltigen Voraddukten umsetzen und dann z.B. die primäre OH-Gruppen aufweisenden Polyole (a2) einreagieren lassen. In einer weiteren Ausführungsform können auch primäre OH-Gruppen aufweisende Polyole (a1) und/oder (a2) mit überschüssigem Diisocyanat (b) zu NCO-endständigen Prepolymeren umgesetzt werden und nachfolgend durch Umsetzung mit Polyolen (a1) und/oder gegebenenfalls auch (a2) die sek. und/oder tert. OH-Gruppen eingeführt werden.

Die zur Urethanbildung erforderliche Reaktionstemperatur liegt bei 20 bis 200°C, bevorzugt bei 40 bis 160°C, besonders bevorzugt bei 40 bis 120°C. Die Umsetzung wird bevorzugt ohne Lösungsmittel durchgeführt. Zur Beschleunigung der Urethanisierungsreaktion können die üblichen aus der Polyurethanchemie bekannten Katalysatoren eingesetzt werden, beispielsweise tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(II)-chlorid, Zinkchlorid, Zink-2-ethylcaproat, Zinn-(II)-2-ethylcaproat, Dibutylzinn(IV)-dilaurat und Molybdänglykolat.

Diese Katalysatoren kommen gegebenenfalls in Mengen von 0,001 bis 2,0 Gew.-%, bevorzugt 0,01 bis 0,2 Gew.-%, bezogen auf die Gesamtmenge der verwendeten Ausgangsverbindungen zum Einsatz.

Obwohl die Herstellung der Polyhydroxypolyurethane A2a) ohne Lösungsmittel in Schmelze bevorzugt wird, kann in manchen Fällen die Verwendung inerter Lösungsmittel angezeigt sein. In diesen Fällen schließt sich anschließend ein geeignetes Ausdampfverfahren an, um die erhaltenen Verbindungen A2a) vom Lösungsmittel zu befreien und die festen Harze zu isolieren. Geeignete Ausdampfverfahren sind z.B. solche, wie nachfolgend bei der Herstellung geeigneter Polyhydroxypolyacrylate A2b) aufgeführt.

Die als mögliche Polyolkomponenten A2) einzusetzenden Polyacrylatpolyole A2b) entsprechen bezüglich der Bindungsart der Hydroxylgruppen, ihrer OH-Zahl und ihrer Glasübergangstemperatur den oben allgemein für die Komponente A2) genannten Bedingungen. Solche Polyacrylatpolyole A2b) sind auf verschiedenen Wegen zugänglich:
1. Verwendung von Hydroxypropyl(meth)acrylat (bei der Anlagerung von Propylenoxid an (Meth)acrylsäure entstehendes Isomerengemisch mit ca. 75 % sekundär und ca. 25 % primär gebundenen OH-Gruppen) als hydroxyfunktionelle Comonomere bei der Herstellung der Polyacrylate A2b).
   Bei der Herstellung solcher Polyacrylate werden in der Regel drei Arten von Monomeren eingesetzt und zwar
   (i) 6,95 bis 51,45 Gew.-Teile Hydroxypropyl(meth)acrylat
   (ii) 93,05 bis 43,55 Gew.-Teile nichtfunktioneller olefinisch ungesättigter Verbindungen und
   (iii) 0 bis 5 Gew.-Teile carboxyfunktioneller olefinisch ungesättigter Verbindungen,
   wobei die Summe der Gew.-Teile der Komponenten (i) bis (iii) 100 beträgt.
   Bei den Monomeren (ii) handelt es sich beispielsweise um Aromaten wie z.B. Styrol, Vinyltoluol, α-Methylstyrol und α-Ethylstyrol; um (Cyclo)Alkylester der Acryl- oder Methacrylsäure mit 2 bis 18 Kohlenstoffatomen im (Cyclo)Alkylrest, wie z.B. Methyl(meth)acrylat, Ethyl(meth)acrylat, n-Propyl(meth)acrylat, Isopropyl(meth)acrylat, n-Butyl(meth)acrylat, Isobutyl(meth)acrylat, tert.-Butyl(meth)acrylat, 2-Ethylhexyl(meth)acrylat, Cyclohexyl(meth)acrylat, Neopentyl(meth)acrylat, Isobornylmethacrylat, Benzylmethacrylat, Phenylethylmethacrylat, 3,3,5-Trimethylcyclohexylmethacrylat und Stearylmethacrylat, um Dialkylester der Malein- und/oder Fumarsäure mit 1 bis 12 Kohlenstoffatomen im Alkylrest, wie z.B. Maleinsäuredimethylester, Maleinsäurediethylester, Maleinsäuredi-n-propylester, Maleinsäurediisopropylester, Maleinsäure-di-n-butylester, Maleinsäurediisobutylester, Maleinsäuredi-tert.-butylester, Maleinsäuredi-2-ethylhexylester, Maleinsäuredicyclohexylester und die entsprechenden Fumarsäureester.
   Bei den Monomeren (iii) handelt es sich beispielsweise um Acrylsäure, Methacrylsäure und Maleinsäure- bzw Fumarsäurehalbester mit 1 bis 12 Kohlenstoffatomen im Alkoholrest. Entsprechend geeignete Alkylreste sind z.B. bei den Dialkylestern der Malein- bzw. Fumarsäure der Monomeren (ii) genannt.
   Bei der Herstellung der hydroxyfunktionellen Copolymerisate A2b) können innerhalb der oben angegebenen Mengenanteilsgrenzen jeweils beliebige Gemische der Monomeren (i) bis (iii) verwendet werden, mit der Maßgabe, daß diese Auswahl bei der Herstellung der Copolymerisate so erfolgt, daß die resultierenden Copolymerisate A2b) Hydroxylzahlen und Glasübergangstemperaturen innerhalb der obengenannten Bereiche aufweisen. Diese für die erfindungsgemäße Verwendbarkeit der Copolymerisate wesentliche Bedingung wird dann erfüllt, wenn bei der Herstellung der Copolymerisate ein geeignetes Verhältnis von "weichmachenden" Monomeren, die zur Erniedrigung der Glasübergangstemperatur der Copolymeren führen, zu "hartmachenden" Monomeren, die zur Erhöhung der Glasübergangstemperatur führen, zur Anwendung gelangt.
   "Weichmachende" Monomere sind beispielsweise Alkylester der Acrylsäure, wie z.B. Ethylacrylat, n-Butylacrylat, Isobutylacrylat und 2-Ethylhexylacrylat.
   "Hartmachende" Monomere sind beispielsweise Alkylester der Methacrylsäure, wie z.B. Methylmethacrylat, Ethylmethacrylat, Isobutylmethacrylat, Cyclohexylmethacrylat, Isopropylmethacrylat, tert.-Butylmethacrylat, Neopentylmethacrylat, Isobornylmethacrylat und 3,3,5-Trimethylcyclohexylmethacrylat, Vinylaromaten, wie z.B. Styrol, Vinyltoluol und α-Ethylstyrol.
   Die Herstellung der hydroxyfunktionellen Copolymerisate erfolgt durch radikalisch initiierte Copolymerisation der obengenannten Monomeren in geeigneten organischen Lösungsmitteln. Dabei werden die Monomeren bei Temperaturen von 60 bis 180°C, vorzugsweise 80 bis 160°C, in Gegenwart von Radikalbildnern und gegebenenfalls Molekulargewichtsreglern copolymerisiert.
   Die Lösungsmittel weisen bei 1013 mbar einen Siedepunkt oder -bereich innerhalb des Temperaturbereichs von 50 bis 150, vorzugsweise 75 bis 130°C auf. Zur Herstellung der Copolymerisate geeignete Lösungsmittel sind beispielsweise Aromaten, wie Toluol oder Xylol; Ester, wie Methylacetat, Ethylacetat, Isopropylacetat, n-Propylacetat, Isobutylacetat, n-Butylacetat oder Methyl-n-amylacetat; Ketone, wie 2-Propanon, 2-Butanon, 2-Pentanon, 3-Pentanon, 3-Methyl-2-butanon, 4-Methyl-2-pentanon, 5-Methyl-2-hexanon oder 2-Heptanon oder beliebige Gemische derartiger Lösungsmittel.
   Die Herstellung der Copolymerisate A2b) kann kontinuierlich oder diskontinuierlich erfolgen. Üblicherweise wird in einen Polymerisationsreaktor gleichmäßig und kontinuierlich die Monomermischung und der Initiator eindosiert und gleichzeitig die entsprechende Menge Polymerisat kontinuierlich abgeführt. So können chemisch nahezu einheitliche Copolymere hergestellt werden. Chemisch nahezu einheitliche Copolymere können auch hergestellt werden, indem man die Reaktionsmischung mit konstanter Geschwindigkeit in einen Rührkessel einlaufen läßt, ohne das Polymer abzuführen.
   Man kann beispielsweise auch einen Teil der Monomeren in Lösungsmitteln der genannten Art vorlegen und die restlichen Monomeren und Hilfsmittel getrennt oder gemeinsam in diese Vorlage bei der Reaktionstemperatur eintragen. Im allgemeinen erfolgt die Polymerisation unter Atmosphärendruck, kann jedoch auch bei Drücken bis zu 25 bar durchgeführt werden. Die Initiatoren werden in Mengen von 0,05 bis 15 Gew.-%, bezogen auf die Gesamtmenge der Monomeren, eingesetzt.
   Geeignete Initiatoren sind übliche Radikalstarter, wie z.B. aliphatische Azoverbindungen, wie Azodiisobuttersäurenitril, Azo-bis-2-methylvaleronitril, 1,1'-Azo-bis-1-cyclohexannitril und 2,2'-Azo-bis-isobuttersäurealkylester, symmetrische Diacylperoxide, wie z.B. Acetyl-, Propionyl- oder Butyrylperoxid, mit Brom-, Nitro- oder Methoxygruppen substituierte Benzoylperoxide, Laurylperoxide; symmetrische Peroxydicarbonate, z.B. Diethyl-, Diisopropyl-, Dicyclohexyl- sowie Dibenzoylperoxydicarbonat; tert.-Butylperoxy-2-ethylhexanoat, tert.-Butyl-perbenzoat; Hydroperoxide, wie beispielsweise tert.-Butylhydroperoxid, Cumolhydroperoxid, Dialkylperoxide, wie Dicumylperoxid; tert.-Butylcumylperoxid oder Di-tert.-butylperoxid.
   Zur Regelung des Molekulargewichtes der Copolymerisate können übliche Regler bei der Herstellung eingesetzt werden. Beispielhaft genannt seien tert.-Dodecylmercaptan, n-Dodecylmercaptan oder Diisopropylxanthogendisulfid. Die Regler können in Mengen von 0,1 bis 10 Gew.-%, bezogen auf die Gesamtmenge des Monomeren, zugegeben werden.
   Zur Isolierung der lösungsmittelfreien Polyacrylatfestharze A2b) werden die erhaltenen Lösungen einem Lösungsmittelentfernungsprozeß unterzogen, wobei das Lösungsmittel möglichst vollständig entfernt wird. Ein solcher Lösungsmittelentfernungsprozeß kann z.B. sein: Sprühtrocknung, Entgasung in speziellen oder handelsüblichen Ausdampfextrudern oder Schlangenrohrverdampfern, Destillation im Vakuum oder Hochvakuum.
   Die hydroxyfunktionellen Polyacrylate A2b) können alternativ auch in Abwesenheit von Lösungsmitteln der genannten Art in Substanz hergestellt und als heiße Schmelze ausgetragen und konfektioniert werden. Bei einem solchen Prozeß wird ein Teil der Monomeren, vorzugsweise Maleinsäuredialkylester, vorgelegt und die restlichen Monomeren und der Initiator getrennt oder gemeinsam in diese Vorlage bei der Reaktionstemperatur eingetragen, wobei diese vorzugsweise im Bereich von 140 bis 180°C liegt. Das fertige Polymerisat wird als Schmelze aus dem Reaktor ausgetragen, abgekühlt und anschließend granuliert.
2. Umsetzung von geeigneten carboxylfunktionellen Polyacrylaten mit entsprechend substituierten Monoepoxiden wie z.B. Isobutylenoxid (2-Methyl-1,2-epoxypropan), Isoamylenoxid (2-Methyl-2,3-epoxybutan), Neohexenoxid (3,3-Dimethyl-1,2-epoxybutan), cis- und/oder trans-2,3-Butylenoxid und Cyclohexenoxid (1,2-Epoxycyclohexan). Die Umsetzung solcher Epoxide mit carboxylfunktionellen Polyacrylaten erfolgt in der Regel bei Temperaturen von 80 bis 200°C, vorzugsweise 100 bis 180°C unter Zuhilfenahme von Katalysatoren. Zweckmäßig wird die Reaktion wegen der niedrigen Siedepunkte der Epoxide in Druckreaktoren unter Drücken bis zu 20 bar durchgeführt.
   Geeignete Katalysatoren sind beispielsweise Salze von tert. Ammoniumverbindungen wie z.B. Tetrabutylammoniumchlorid oder Tetrabutylammoniumbromid.
   Die benötigten carboxylfunktionellen Polyacrylate werden in gleicher Weise hergestellt wie die zuvor genannten hydroxylfunktionellen Polyacrylate mit dem Unterschied, daß keine OH-funktionellen Monomeren zum Einsatz gelangen. Dabei werden als carboxylfunktionelle Monomere vorzugsweise Acrylsäure oder Methacrylsäure verwendet, es können jedoch auch Halbester der Maleinsäure und Fumarsäure zum Einsatz kommen. Eine besondere Variante der Herstellung von carboxylfunktionellen Polyacrylaten geht von cyclischen Anhydridgruppen enthaltenden Polyacrylaten aus, die unter Verwendung von Maleinsäureanhydrid hergestellt werden, welche in einem zweiten Reaktionsschritt mit monofunktionellen Alkoholen mit 1 bis 17 Kohlenstoffatomen, gegebenenfalls in Gegenwart von z.B. Aminkatalysatoren, zum entsprechenden Halbester umgesetzt werden.
   Bei den neben carboxyl- und/oder anhydridfunktionellen Monomeren mitzuverwendenden weiteren nichtfunktionellen Comonomeren handelt es sich prinzipiell um die gleichen Vertreter, die schon bei den zuvor beschriebenen hydroxyfunktionellen Polyacrylaten beispielhaft genannt wurden.
3. Umsetzung von geeigneten epoxidfunktionellen Polyacrylaten mit Monocarbonsäuren wie z.B. Essigsäure, Propionsäure, Buttersäure, Isobuttersäure, Valeriansäure, Isovaleriansäure, Ethylmethylessigsäure, Trimethylessigsäure und 2-Ethylhexansäure. Prinzipiell sind auch längerkettige Carbonsäuren mit bis zu 17 Kohlenstoffatomen geeignet, jedoch müssen dann die umzusetzenden epoxyfunktionellen Polyacrylate entsprechend hohe Glasübergangstemperaturen aufweisen, damit nach der Umsetzung mit Monocarbonsäuren hydroxyfunktionelle Polyacrylate A2b) mit Glasübergangstemperaturen resultieren, die im gewünschten Bereich von 30 bis 120°C liegen.
4. Umsetzung von geeigneten hydroxyfunktionellen Polyacrylaten mit Diisocyanaten und entsprechend substituierten aliphatischen und/oder cycloaliphatischen Diolen. Geeignete hydroxyfunktionelle Polyacrylate sind beispielsweise solche wie zuvor schon unter 1. genannt und zusätzlich solche, die statt sekundäre auch primäre Hydroxylgruppen aufweisen. Dabei sind primäre Hydroxylgruppen aufweisende Polyacrylate, die z.B. durch Verwendung von Hydroxyethyl(meth)acrylat als OH-Monomer herstellbar sind, bevorzugt. Geeignete Comonomere wurden unter 1. zuvor schon genannt.

Für die Umsetzung geeignete Diisocyanate sind die bei der Herstellung der Polyhydroxypolyurethane A2a) unter (b) genannten Verbindungen, geeignete aliphatische und/oder cycloaliphatische Diole mit sekundär und/oder tertiär gebundenen OH-Gruppen sind die dort in der ersten beispielhaften Gruppe unter (a1) aufgeführten Verbindungen. Bei den auf diesem Weg erhältlichen erfindungsgemäß geeigneten Polyacrylaten A2b) entspricht das Herstellverfahren dem bei der Herstellung der Polyhydroxypolyurethane A2a) beschriebenen Verfahren.

Die als mögliche Polyolkomponenten A2) einzusetzenden Polyesterpolyole A2c) entsprechen bezüglich der Art ihrer Hydroxylgruppen, ihrer OH-Zahl und ihrer Glasübergangstemperatur den bereits oben allgemein für die Komponente A2) angegebenen Bedingungen. Ihr mittleres (aus OH-Gehalt und OH-Funktionalität errechenbares) Molekulargewicht liegt im allgemeinen bei 400 bis 10000, vorzugsweise 1000 bis 5000.

Solche Polyesterpolyole A2c) sind weniger bevorzugt und auf verschiedenen Wegen zugänglich:
Veresterung von Säuren oder Säurederivaten der bereits oben beispielhaft genannten Art mit überschüssigen Mengen an Di- und/oder Triolen mit sekundär und/oder tertiär gebundenen alkoholischen Hydroxylgruppen der bereits oben beispielhaft unter (a1) genannten Art oder
Umsetzung geeigneter carboxylfunktioneller Polyester mit entsprechend substituierten Monoepoxiden. In diesem Fall können die für Pulverlacke bekannten Carboxylgruppen aufweisenden Polyester verwendet werden und wie oben bei der Herstellung der Polyacrylate A2b) unter Punkt 2. beschrieben mit geeigneten und dort beispielhaft genannten Monoepoxiden umgesetzt werden.

Bei den gegebenenfalls zur Beschleunigung der Aushärtung der Pulverlackharze mitzuverwendenden Katalysatoren B) handelt es sich um die üblichen, aus der Polyurethanchemie bekannten Verbindungen, wie sie schon oben beim Verfahren zur Herstellung der Polyhydroxypolyurethane A2) zur Katalyse der Urethanisierungsreaktion beispielhaft aufgeführt wurden. Wenn Katalysatoren zum Einsatz kommen, sind innerhalb dieser Gruppe Zink-, Zinn(II)- oder Zinn(IV)-Salze bevorzugt.

Weitere Vertreter von geeigneten Katalysatoren sowie Einzelheiten über die Wirkungsweise von solchen Katalysatoren sind im Kunststoff-Handbuch, Band VII, herausgegeben von Vieweg und Höchtlen, Carl-Hanser-Verlag, München 1966, z.B. auf den Seiten 96 bis 102, beschrieben.

Diese Katalysatoren können gegebenenfalls in Mengen von 0,01 bis 5,0 Gew.-%, vorzugsweise 0,05 bis 1,0 Gew.-% bezogen auf die Gesamtmenge an organischem Bindemittel, d.h. der erfindungsgemäßen Kombination aus Polyisocyanat A1) und Polyol A2) aber exclusive den gegebenenfalls verwendeten weiteren Hilfs- und Zusatzmitteln C), zugesetzt werden.

Bei den gegebenenfalls mitzuverwendenden Hilfs- und Zusatzmitteln C) handelt es sich beispielsweise um Verlaufsmittel, wie z.B. Polybutylacrylat oder solchen auf Basis von Polysilikonen, Lichtschutzmittel, wie z.B. sterisch gehinderte Amine oder UV-Absorber, z.B. Benztriazole oder Benzophenone und Pigmente, wie z.B. Titandioxid.

Zur Herstellung des gebrauchsfertigen Pulverlacks werden die Polyisocyanatkomponente A1) und die Polyhydroxylkomponente A2) miteinander gemischt und gegebenenfalls mit den Katalysatoren B) und den Zusatzmitteln C) versehen und beispielsweise auf Extrudern oder Knetern bei Temperaturen oberhalb des Schmelzbereichs der Einzelkomponenten, beispielsweise bei 80 bis 140°C, vorzugsweise bei 80 bis 120°C, zu einem homogenen Material vereinigt. Der nach Abkühlen der Schmelze resultierende Feststoff wird anschließend gemahlen und durch Sieben von den Kornanteilen oberhalb 0,1 mm befreit. Die Komponenten A1) und A2) kommen hierbei in solchen Mengenverhältnissen zum Einsatz, daß für jede Hydroxylgruppe der Komponente A2) 0,6 bis 1,2, vorzugsweise 0,8 bis 1,0, Isocyanatgruppen der Komponente A1) zur Verfügung stehen. Zur Herstellung des gebrauchsfertigen Pulverlacks aus den Ausgangsmaterialien ist nur ein sehr kurzzeitiges Erhitzen auf Temperaturen oberhalb des Schmelzbereichs der Einzelkomponenten erforderlich, so daß davon ausgegangen werden kann, daß nur maximal 30 % der ursprünglich vorliegenden NCO-Gruppen der Komponente A1) mit einem Teil der Komponente A2) unter Bildung von Reaktionsprodukten A3) abreagiert sind. Dies ergibt sich auch aus titrimetrischen NCO-Bestimmungen und zeigt sich auch in dem Umstand, daß der Schmelzbereich des gebrauchsfertigen Pulverlacks in erster Näherung den Schmelzbereichen der Einzelkomponenten, insbesondere dem Schmelzbereich der Polyhydroxylkomponente A2), die im allgemeinen in den Pulverlacken in höheren Gewichtsanteilen vorliegt, entspricht. Im übrigen bedarf es nur eines kurzen Vorversuchs, um die optimale Temperatur zur Herstellung des gebrauchsfertigen Pulverlacks zu ermitteln, bei welcher einerseits eine einwandfreie Durchmischung der in der Schmelze vorliegenden Einzelkomponenten möglich und eine unerwünschte Vorreaktion weitgehend ausgeschlossen ist.

Der so hergestellte Pulverlack kann in der Regel bei Raumtemperatur über einen längeren Zeitraum wie z.B. 3 bis 6 Monate ohne wesentliche Veränderungen gelagert werden, jedoch ist in Einzelfällen, je nach Zusammensetzung, auch eine gekühlte Lagerung bei z.B. maximal 10°C angeraten.

Der so hergestellte Pulverlack kann nach üblichen Pulverauftragsverfahren, wie z.B. elektrostatisches Pulverversprühen oder Wirbelsintern, auf die zu überziehenden Substrate aufgebracht werden. Die Härtung der Überzüge erfolgt durch Erhitzen auf Temperaturen von 100 bis 200°C, vorzugsweise 120 bis 180°C beispielsweise während eines Zeitraums von ca. 10 bis 30 Minuten. Man erhält harte, glänzende und elastische Überzüge mit hervorragenden Korrosionsschutzeigenschäften und einer sehr guten Wärmefarbstabilität.

Mit Hilfe der erfindungsgemäßen Polyisocyanatgemische hergestellte Pulverlacke weisen eine hohe Licht- und Wetterbeständigkeit auf, und sind somit für Außenanwendungen besonders geeignet.

Erfindungsgemäß können beliebige hitzeresistente Substrate, wie beispielsweise solche aus Glas oder Metallen, beschichtet werden.

Die erfindungsgemäßen Pulverlacke können nach einem speziellen Applikationsverfahren auch nach dem Mischen und Schmelzen der Einzelkomponenten im Extruder direkt in geschmolzenem Zustand auf die oberhalb der Schmelzder Harze vorgeheizten und beschichteten Substrate aufgetragen und nachfolgend eingebrannt werden.

Die nachfolgenden Beispiele dienen zur weiteren Erläuterung der Erfindung. Alle Prozentangaben, mit Ausnahme der Glanzwerte, beziehen sich auf Gewichtsprozente.

### Beispiele

### Herstellung von Ausgangsverbindungen

### Polyisocyanat I

Entsprechend Beispiel 2 der EP-A-0 003 765 wird Isophorondiisocyanat (IPDI) bis zu einem NCO-Gehalt von 31,1 % trimerisiert und das überschüssige IPDI durch Dünnschichtdestillation bei 170°C/0,1 mbar entfernt. Man erhält ein Isocyanuratpolyisocyanat als nahezu farbloses Festharz mit einem NCO-Gehalt von 16,4 %, einem Schmelzpunkt von ca. 100°C und einem Gehalt an monomerem IPDI von <0,2 %, das erfindungsgemäß als Komponente A1) Verwendung findet.

### Polyisocyanat II

Entsprechend Beispiel 12 der EP-A-0 330 966 wird 1,6-Diisocyanatohexan (HDI) bis zu einem NCO-Gehalt von 38,1 % trimerisiert und das überschüssige HDI durch Dünnschichtdestillation bei 140°C/0,1 mbar entfernt. 16 Gew.-Teile dieses Isocyanuratpolyisocyanats auf Basis von HDI werden mit 84 Gew.-Teilen des Polyisocyanats I auf Basis von IPDI in der Schmelze bei 120°C homogen vermischt. Man erhält ein nahezu farbloses Festharz mit einem NCO-Gehalt von 17,2 %, einem Schmelzpunkt von ca. 70°C und einem Gehalt an monomeren Diisocyanaten von <0,2 %, das erfindungsgemäß als Komponente A1) Verwendung findet.

### Polyisocyanat III

2620 g 4,4'-Diisocyanatodicyclohexylmethan werden mit 10 g einer 10 %igen Lösung von N,N,N-Trimethyl-N-(2-hydroxypropyl)ammoniumhydroxid, hergestellt durch Umsetzung von Trimethylamin mit Propylenoxid in Methanol, gelöst in 2-Ethyl-1,3-hexandiol: 1,3-Butandiol = 4:1, versetzt und bei 75 bis 80°C bis zu einem NCO-Gehalt von 26,8 % trimerisiert. In Abmischung mit 15 Gew.-Teilen des nach Beispiel 12 der EP 330 966 erhaltenen Isocyanuratpolyisocyanats auf Basis von HDI erhält man nach Dünnschichtdestillation bei 200°C/0,15 mbar 100 Gew.-Teile eines fahlgelben Festharzes mit einem NCO-Gehalt von 15,1 %, einem Schmelzpunkt von ca. 100°C und einem Gehalt an monomeren Diisocyanaten von <0,2 %, das erfindungsgemäß als Komponente A1) Verwendung findet.

### Esterpolyol I

### Herstellung einer Komponente (a2)

590 g 1,1,1-Trimethylolpropan (TMP) und 1505 g ε-Caprolacton werden bei Raumtemperatur unter trockenem Stickstoff vermischt, mit 0,02 g ortho-Phosphorsäure versetzt und anschließend für 5 h auf 160°C erhitzt. Nach Abkühlen auf Raumtemperatur erhält man ein farbloses, flüssiges Produkt mit folgenden Kenndaten:

| | |
|---|---|
| η (23°C) | 1400 mPas |
| OH-Zahl | 341 mg KOH/g |
| freies Caprolacton | 0,4 % |
| mittleres Molekulargewicht | |
| (aus OH-Zahl ber.) | 493 |
| Estergruppengehalt (ber.) | 27,7 % |
| OH-Funktionalität | 3 |

### Esterpolyol II

### Herstellung einer Komponente (a2)

Aus 334 Teilen Isophthalsäure, 118 Teilen Adipinsäure, 60 Teilen Phthalsäureanhydrid, 380 Teilen 1,6-Hexandiol und 108 Teilen 1,1,1-Trimethylolpropan (TMP) wird bei einer Temperatur bis 220°C unter Wasserabscheidung ein hochviskoser flüssiger Polyester mit folgenden Kenndaten erhalten:

| | |
|---|---|
| OH-Zahl | 142 mg KOH/g |
| mittleres Molekulargewicht: | |
| (aus OH-Zahl ber.): | 1185 |
| OH-Funktionalität | ca. 3 |

### Beispiel 1

### Herstellung eines Polyhydroxypolyurethans A2a)

Eine Mischung aus 246,0 Teilen Esterpolyol I, 280,0 Teilen Esterpolyol II und 182,4 Teilen 1m2-Propandiol wird bei 110 bis 140°C mit 655,0 Teilen 4,4'-Diisocyanatodicyclohexylmethan umgesetzt, bis alle NCO-Gruppen verbraucht sind. Man gießt die heiße Schmelze auf ein Blech, läßt erkalten und erhält ein fahlgelbes Festharz mit folgenden Kenndaten:

| | |
|---|---|
| Schmp. | ca. 80°C |
| OH-Gehalt | 2,5 % |
| Äquiv.-Gewicht | 682 g/val OH |
| OH-Funktionalität | 3,2 |

### Beispiel 2

### Herstellung eines Polyhydroxypolyurethans A2a)

655,0 Teile 4,4'-Diisocyanatodicyclohexylmethan werden bei 60°C mit 182,4 Teilen 1,2-Propandiol versetzt, und man läßt ca. 5 h bei dieser Temperatur reagieren, bis ein NCO-Gehalt von 12,8 % (NCO_{theoretisch} = 13,0 % nach OHₚᵣᵢₘ/NCO-Reaktion) erreicht wird. Nun läßt man eine Mischung aus 246,0 Teilen Esterpolyol I und 280,0 Teilen Esterpolyol II bei 60°C zufließen und heizt innerhalb ca. 2 h allmählich bis 120°C. Man rührt so lange bei 120°C nach, bis alle NCO-Gruppen verbraucht sind, gießt die heiße Schmelze auf ein Blech und erhält nach Erkalten ein fahlgelbes Festharz mit folgenden Kenndaten:

| | |
|---|---|
| Schmp. | ca. 77°C |
| OH-Gehalt | 2,5 % |
| Äquiv.-Gewicht | 682 g/val OH |
| OH-Funktionalität | 3,2 |

### Beispiel 3

### Herstellung eines Polyhydroxypolyurethans A2a)

Bei 120°C werden zu einer homogenen Mischung aus 246,5 Teilen Esterpolyol I, 360,0 Teilen Esterpolyol II und 271,4 Teilen 2-Methyl-2,4-pentandiol, 655,0 Teile 4,4'-Diisocyanatodicyclohexylmethan zugetropft, und man läßt bei 120 bis 150°C ca. 3 h reagieren, bis die NCO-Gruppen vollständig abreagiert haben. Nach dem Ausgießen und Erkalten der Schmelze auf einem Blech erhält man ein Festharz mit folgenden Kenndaten:

| | |
|---|---|
| Schmp. | ca. 95°C |
| OH-Gehalt | 2,2 % |
| Äquiv.-Gewicht | 762 g/val OH |
| OH-Funktionalität | 3,3 |

### Beispiel 4

### Herstellung eines Polyhydroxypolyurethans A2a)

655,0 Teile 4,4'-Diisocyanatodicyclohexylmethan werden bei 80°C mit 271,4 Teilen 2-Methyl-2,4-pentandiol versetzt, man heizt bis 120°C und läßt ca. 4 h reagieren, bis ein NCO-Gehalt von 12,5 % erreicht ist (NCO_{theor.} = 12,2 % nach OH_{sek.}/NCO-Reaktion). Man läßt bis 60°C Innentemperatur abkühlen und gibt eine Mischung von 246,5 Teilen Esterpolyol I und 360,0 Teilen Esterpolyol II zu. Unter allmählichem Aufheizen bis 120°C läßt man ca. 2,5 h reagieren, bis die NCO-Gruppen abreagiert haben. Man gießt die viskose Schmelze auf ein Blech und erhält ein Festharz mit folgenden Kenndaten:

| | |
|---|---|
| Schmp. | ca. 85°C |
| OH-Gehalt | 2,2 % |
| Äquiv.-Gewicht | 760 g/val OH |
| OH-Funktionalität | 3,3 |

### Beispiel 5

### Herstellung eines Polyhydroxypolyurethans A2a)

Zu einer homogenen Mischung aus 280,0 Teilen Esterpolyol II, 67,0 Teilen 1,1,1-Trimethylolpreopan (TMP) und 283,2 Teilen 2-Methyl-2,4-pentandiol werden bei 120°C innerhalb ca. 1 h 655,0 Teile 4,4'-Diisocyanatodicyclohexylmethan zugetropft. Die Viskosität der Schmelze steigt kontinuierlich an, und man heizt auf 140 bis 150°C, um die Mischung gut rührbar zu halten. Man rührt ca. 1 h bei dieser Temperatur nach, bis alle NCO-Gruppen abreagiert haben, gießt die heiße Schmelze auf ein Blech und erhält nach dem Erstarren ein leicht gelbliches Festharz mit folgenden Kenndaten:

| | |
|---|---|
| Schmp. | ca. 100°C |
| OH-Gehalt | 2,6 % |
| Äquiv.-Gewicht | 645 g/val OH |
| OH-Funktionalität | 3,2 |

### Beispiel 6

### Herstellung eines Polyhydroxypolyurethans A2a)

Zu einer homogenen Mischung aus 245,0 Teilen Esterpolyol I, 280,0 Teilen Esterpolyol II und 250,0 Teilen 2-Methyl-1,3-butandiol werden bei 120°C beginnend unter Rühren innerhalb ca. 30 min 655,0 Teile 4,4'-Diisocyanatodicyclohexylmethan zugetropft. Man läßt ca. 3 h bei 120 bis 130°C reagieren, bis alle NCO-Gruppen abreagiert haben, gießt die Schmelze auf ein Blech und erhält nach dem Erkalten ein Festharz mit folgenden Kenndaten:

| | |
|---|---|
| Schmp. | ca. 75°C |
| OH-Gehalt | 2,4 % |
| Äquiv.-Gewicht | 710 g/val OH |
| OH-Funktionalität | 3,2 |

### Beispiel 7

### Herstellung eines Polyhydroxypolyurethans A2a)

Zu einer Mischung aus 600,0 Teilen Esterpolyol II, 67,0 Teilen 1,1,1-Trimethylolpropan (TMP), 146,0 Teilen 2,2,4-Trimethyl-1,3-pentandiol und 118,0 Teilen 2-Methyl-2,4-pentandiol werden bei 120°C innerhalb ca. 30 min 555,0 Teile 1-Isocyanato-3,3,5-trimethyl-5-isocyanatomethyl-cyclohexan (IPDI) zugegeben und man läßt ca. 2 h bei 120 bis 125°C reagieren, bis alle NCO-Gruppen abreagiert haben. Man gießt die heiße Schmelze auf ein Blech und erhält nach dem Erkalten ein Festharz mit folgenden Kenndaten:

| | |
|---|---|
| Schmp. | ca. 90°C |
| OH-Gehalt | 2,3 % |
| Äquiv.-Gewicht | 743 g/val OH |
| OH-Funktionalität | 4,0 |

### Beispiel 8

### Herstellung eines Polyhydroxypolyacrylats A2b)

In einem 5-l-Polymerisationsdruckreaktor mit automatischer Temperatursteuerung werden 700 g Butylacetat vorgelegt und auf 125°C erhitzt. Dann werden durch separate Zuläufe gemeinsam beginnend innerhalb von 2 Stunden eine Monomermischung aus 915 g Methylmethacrylat, 580 g n-Butylmethacrylat, 455 g Styrol und 260 g Acrylsäure und innerhalb von 2,5 Stunden eine Initiatorlösung von 115 g tert.-Butylperoxy-2-ethylhexanoat, 70 %ig in Isododecan, und 105 g Butylacetat zudosiert. Dann wird 1,5 Stunden bei 125°C nachgerührt. Anschließend wird auf 90°C abgekühlt und auf Normaldruck entspannt. Danach werden 365 g 3,3-Dimethyl-1,2-epoxybutan und 5 g Tetrabutylammoniumbromid zugegeben, auf 120°C erhitzt und so lange bei dieser Temperatur gerührt, bis die Säurezahl <2 mg KOH/g Substanz ist. Anschließend werden das Lösungsmittel und sonstige flüchtige Bestandteile im Vakuum abdestilliert, die Harzschmelze in Alublechschalen abgelassen und im Vakuumtrockenschrank bei 140°C und einem Vakuum von ca. 0,1 mbar bis zur Gewichtskonstanz getrocknet. Es wird ein nahezu farbloses Festharz mit einem Festgehalt von 99,3 %, einer Säurezahl von 0,2 mg KOH/g Substanz und einer Hydroxylzahl von 75,8 mg KOH/g Substanz erhalten.

### Beispiel 9

### Herstellung eines Polyhydroxypolyacrylats A2b)

In einem 5-1-Polymerisationsdruckreaktor mit automatischer Temperatursteuerung werden 700 g Butylacetat vorgelegt und auf 125°C erhitzt. Dann werden durch separate Zuläufe gemeinsam beginnend innerhalb von 2 Stunden eine Monomermischung aus 935 g Methylmethacrylat, 590 g n-Butylmethacrylat, 460 g Styrol und 270 g Acrylsäure und innerhalb von 2,5 Stunden eine Initiatorlösung von 115 g tert.-Butylperoxy-2-ethylhexanoat, 70 %ig in Isododecan und 105 g Butylacetat zudosiert. Dann wird 1,5 Stunden bei 125°C nachgerührt. Anschließend wird auf 90°C abgekühlt und auf Normaldruck entspannt. Danach werden 320 g 2-Methyl-1,2-epoxypropan und 5 g Tetrabutylammoniumbromid zugegeben, auf 140°C erhitzt und so lange bei dieser Temperatur gerührt, bis die Säurezahl <5 mg KOH/g Substanz ist. Anschließend werden das Lösungsmittel und sonstige flüchtige Bestandteile im Vakuum abdestilliert, die Harzschmelze in Alublechschalen abgelassen und im Vakuumtrockenschrank bei 140°C und einem Vakuum von ca. 0,1 mbar bis zur Gewichtskonstanz getrocknet. Es wird ein nahezu farbloses Festharz mit einem Festgehalt von 99,6 %, einer Säurezahl von 4,2 mg KOH/g Substanz und einer Hydroxylzahl von 72,3 mg KOH/g Substanz erhalten.

### Vergleichsbeispiel A

### Herstellung eines Polyhydroxypolyurethans mit primär gebundenen OH-Gruppen

Zu einer homogenen Mischung aus 2400 Teilen Esterpolyol II, 134 Teilen 1,1,1-Trimethylolpropan (TMP) und 1354 Teilen Cyclohexandimethanol werden bei 120°C 2624 Teile 4,4'-Diisocyanatodicyclohexylmethan innerhalb ca. 3 h zufließen gelassen. Man heizt bei steigender Viskosität der Schmelze auf 180 bis 190°C auf und gießt die Schmelze nach beendeter Umsetzung auf ein Blech. Nach dem Erkalten erhält man ein stückiges helles Festharz mit den folgenden Kenndaten:

| | |
|---|---|
| Schmp. | ca. 125°C |
| OH-Gehalt | 2,1 % |
| Äquiv.-Gewicht | 815 g/val OH |
| OH-Funktionalität | 3,2 |

### Vergleichsbeispiel B

### Herstellung eines Polyhydroxypolyacrylats mit primär gebundenen OH-Gruppen

In einem 25 1-Edelstahldruckreaktor mit Rühr-, Kühl- und Heizvorrichtung werden 9000 Teile Toluol vorgelegt und auf 125°C aufgeheizt. Dann werden parallel zwei Teile, Teil I über einen Zeitraum von insgesamt 4 h und Teil II über einen Zeitraum von 5 h, zudosiert. Teil I ist eine Mischung aus 3660 Teilen Methylmethacrylat, 2374 Teilen n-Butylmethacrylat, 1868 Teilen Styrol, 1892 Teilen 2-Hydroxyethylmethacrylat und 100 Teilen Acrylsäure, Teil II setzt sich aus 480 Teilen 70 %igem tert.-Butylperoxy-2-ethylhexanoat und 668 Teilen Toluol zusammen. Anschließend wird 2 h bei 125°C nachgerührt. Die erhaltene Polymerlösung wird in einem handelsüblichen Ausdampfextruder bei einer Temperatur von ca. 150°C, einer Verweilzeit von ca. 2 Minuten und einem Vakuum von ca. 200 mbar vollständig vom Toluol befreit, das Produkt anschließend abgekühlt und granuliert. Das erhaltene feste Copolymerisat weist eine OH-Zahl von 70 und eine Säurezahl von 7,4 auf.

### Vergleichsbeispiel C

### Herstellung eines Polyhydroxypolyesters mit primär gebundenen OH-Gruppen

Eine Mischung aus 38,2 Teilen Neopentylglykol, 5,3 Teilen 1,6-Hexandiol und 4,5 Teilen 1,1,1-Trimethylolpropan (TMP) wird mit 66,6 Teilen Terephthalsäure unter Wasserabscheidung verestert. Nach beendeter Wasserabscheidung gießt man den geschmolzenen Polyester auf ein Blech und erhält nach dem Erkalten ein Festharz mit einem Schmelzbereich von ca. 80 bis 85°C und einer OH-Zahl von 50 mg KOH/g.

### Beispiele 10 bis 15 und Vergleichsbeispiele D bis F (Verwendung)

Die Beispiele 10 bis 15 belegen für sechs erfindungsgemäße Klarlackformulierungen die hohen Glanzwerte (Glanz nach Gardner, Reflexionswinkel 20°) der resultierenden Lackierungen nach Einbrennen bei 140 bis 160°C sowie die anhand der Gelierzeiten beobachteten guten Lagerstabilitäten der Pulverlacke bei Raumtemperatur.

Die Lackierungen aus den Vergleichsbeispielen D bis F weisen deutlich niedrigere Glanzwerte auf, und die zugrundeliegenden Pulverlacke zeigen während des Herstellprozesses bzw. nach Lagerung nur geringe Stabilität.

### Beispiele 10 bis 15 (Verwendung)

Aus folgenden Komponenten werden Klarlacke bereitet:
(Angaben in Gew.-Teilen)

| | Beispiele | | | | | |
|---|---|---|---|---|---|---|
| Komponenten | 10 | 11 | 12 | 13 | 14 | 15 |
| Beispiel 2 | 74,3 | - | 73,5 | - | 73,0 | - |
| Beispiel 4 | - | 74,3 | - | 73,5 | - | 73,0 |
| Polyisocyanat II | - | - | - | - | 25,0 | 25,0 |
| Polyisocyanat I | 24,7 | 24,7 | 24,5 | 24,5 | - | - |
| Katalysator *) ®Hostanox ZNCS | - | - | 1,0 | 1,0 | 1,0 | 1,0 |
| Zusatzmittel **) ®Perenol F30P | 1,0 | 1,0 | 1,0 | 1,0 | 1,0 | 1,0 |

| | | | | | | |
|---|---|---|---|---|---|---|
| *) ®Hostanox ZNCS ist ein handelsüblicher Katalysator auf Basis eines Zink-Salzes, Hersteller: Fa. Hoechst AG | | | | | | |
| **) ®Perenol F30P ist ein handelsübliches Verlaufsmittel auf Basis eines Butylacrylatcopolymeren, Hersteller: Fa. Henkel, Düsseldorf | | | | | | |

Zur Bereitung der Pulverlacke werden die Komponenten mit Hilfe eines Doppelwellen-Extruders ZDSK 28 (Fa. Werner & Pfleiderer) bei 200 U/min, einer Gehäusetemperatur von 100°C, einer Austrittstemperatur von 120°C und einer Verweilzeit von ca. 70 sec. extrudiert und die erhaltenen Granulate mit Hilfe einer Sichtermühle ACM 2 (Fa. Hosokawa Mikropul) mit einem 90 µm-Sieb gemahlen und gesiebt.

Von diesen Pulverlacken werden, sowohl unmittelbar nach ihrer Herstellung als auch nach 3-monatiger Lagerung bei Raumtemperatur folgende Gelierzeiten bestimmt:

| | Beispiele | | | | | |
|---|---|---|---|---|---|---|
| | 10 | 11 | 12 | 13 | 14 | 15 |
| Gelierzeit frisch/s | | | | | | |
| 160°C | >600 | >600 | 189 | 322 | 176 | 301 |
| 180°C | 400 | >600 | 81 | 144 | 73 | 126 |
| 200°C | 181 | 439 | n.b. | n.b. | n.b. | n.b. |

| Gelierzeit nach 3 Mon. Lagerung bei RT/s | | | | | | |
|---|---|---|---|---|---|---|
| 160°C | n.b. | n.b. | 163 | 297 | 161 | 285 |
| 180°C | n.b. | n.b. | 61 | 112 | 52 | 98 |
| (Messung nach DIN 55 990, Teil 8, Punkt 5.1) | | | | | | |
| n.b.: nicht bestimmt | | | | | | |

Für die Beispiele 12 und 13 wurde außerdem der NCO-Gehalt nach Herstellung und nach 3-monatiger Lagerung bei Raumtemperatur titrimetrisch bestimmt und dem berechneten Wert (4,0 %) gegenübergestellt. Hierbei zeigt sich, daß während der Herstellung des Pulverlacks des Beispiels 13 überhaupt keine Reaktion zwischen den Ausgangskomponenten A1) und A2) stattfand, während beim Pulverlack gemäß Beispiel 12 eine untergeordnete Vorreaktion unter Bildung untergeordneter Mengen an Reaktionsprodukten A3) ablief. Auch nach 3-monatiger Lagerung war der größte Teil der freien NCO-Gruppen unverändert, so das der Pulverlack auch nach dieser Lagerzeit einwandfrei verarbeitbar war.

| | Beispiel 12 | Beispiel 13 |
|---|---|---|
| NCO berechnet (%) | 4,0 | 4,0 |
| NCO titriert (frisch, %) | 3,9 | 4,0 |
| NCO titriert (3 Monate Lagerung bei RT, %) | 3,3 | 3,5 |

Mit den erfindungsgemäßen Pulvern entsprechend den Beispielen 10 bis 15 werden entfettete Stahlbleche beschichtet und im Gradientenofen 30 Minuten bei 140°C/150°C/160°C eingebrannt. Die Schichtdicken betragen 60 ± 5 µm. Es werden folgende Prüfergebnisse erhalten:

| | Beispiele | | | | | |
|---|---|---|---|---|---|---|
| | 10 | 11 | 12 | 13 | 14 | 15 |
| Erichsentiefung/mm* | | | | | | |
| 30 min 140°C | 0,4 | 0,1 | 8,3 | 0,1 | 9,0 | 0,1 |
| 30 min 150°C | 2,4 | 0,5 | 8,6 | 0,5 | 9,0 | 2,1 |
| 30 min 160°C | 9,0 | 4,5 | 8,6 | 9,0 | 9,0 | 9,0 |

| Acetontest**) | | | | | | |
|---|---|---|---|---|---|---|
| 30 min 150°C | <50 | <50 | 0 | 0 | 0 | 2 |
| 30 min 150°C | 2 | <50 | 0 | 0-1 | 0 | 0-1 |
| 30 min 160°C | 1-2 | 2 | 0 | 0 | 0 | 0 |

| Glanz 20°***) | | | | | | |
|---|---|---|---|---|---|---|
| 30 min 140°C | 92 | 87 | 84 | 92 | 80 | 86 |
| 30 min 150°C | 88 | 87 | 80 | 86 | 81 | 85 |
| 30 min 160°C | 89 | 90 | 80 | 90 | 83 | 85 |

| | | | | | | |
|---|---|---|---|---|---|---|
| *) Erichsentiefung, DIN 53 156 | | | | | | |
| **) Acetonbeständigkeit, 50 Doppelhübe mit getränktem Wattebausch 0 = Film intakt; 1 = Filmoberfläche angeweicht; 2 = Film bis zum Untergrund angequollen; <50 = Film nach weniger als 50 Doppelhüben aufgelöst | | | | | | |
| ***) Glanz nach Gardner, Reflexionswinkel 20° | | | | | | |

Die Versuche zeigen, daß mit den Polyhydroxypolyurethanen aus Beispiel 2 und 4 in Kombination mit den Härtern Polyisocyanat I und II bei Raumtemperatur lagerstabile Lackformulierungen erhalten werden, die bei Einbrenntemperaturen von 140 bis 160°C zu hochglänzenden, acetonfesten Beschichtungen mit Erichsentiefungswerten von 8-9 mm führen.

### Vergleichsbeispiele D bis F (Verwendung)

Aus folgenden Komponenten werden Klarlacke bereitet: (Angaben in Gew.-Teilen)

| | Vergleichsbeispiele | | |
|---|---|---|---|
| Komponenten | D | E | F |
| Vergleichsbeispiel C) | 80,5 | - | - |
| Vergleichsbeispiel B) | - | 71,1 | - |
| Vergleichsbeispiel A) | - | - | 74,3 |
| Polyisocyanat I | 18,5 | - | 24,7 |
| Polyisocyanat II | - | 27,9 | - |
| Zusatzmittel ®Perenol F30P | 1,0 | 1,0 | 1,0 |

Die Herstellung der Pulverlacke erfolgt analog der Beispiele 10 bis 15 (Verwendung).

Die Gelierzeiten betragen:

| | Vergleichsbeispiele | | |
|---|---|---|---|
| | D | E | F |
| Gelierzeit frisch/s | | | |
| 160°C | sofort | sofort | 86 |
| 180°C | n.b. | n.b. | 44 |
| 200°C | n.b. | n.b. | sofort |

| Gelierzeit nach 3 Monaten Lagerung bei RT/s | | | |
|---|---|---|---|
| 160°C | sofort | sofort | sofort |

Mit Pulvern entsprechend den Vergleichsbeispielen D bis F werden entfettete Stahlbleche beschichtet und im Gradientenofen 30 min bei 140°C/150°C/160°C eingebrannt. Schichtdicke 60 ± 5 µm.

| | Vergleichsbeispiele | | |
|---|---|---|---|
| | D | E | F |
| Erichsentiefung | | | |
| 30 min 140°C | n.b.* | n.b.* | 7,6 |
| 30 min 150°C | n.b.* | n.b.* | 8,0 |
| 30 min 160°C | n.b.* | n.b.* | 7,9 |

| Acetonfestigkeit | | | |
|---|---|---|---|
| 30 min 140°C | n.b.* | n.b.* | 0-1 |
| 30 min 150°C | n.b.* | n.b.* | 0-1 |
| 30 min 160°C | n.b.* | n.b.* | 0 |

| Glanz 20° | | | |
|---|---|---|---|
| 30 min 140°C | n.b.* | n.b.* | 18 |
| 30 min 150°C | n.b.* | n.b.* | 16 |
| 30 min 160°C | n.b.* | n.b.* | 17 |

| | | | |
|---|---|---|---|
| n.b. nicht bestimmt * Die Prüfungen der Vergleichsbeispiele D und E sind nicht möglich, da die "Beschichtungen" nicht aufgeschmolzen sind. | | | |

Die Versuche zeigen, daß die Formulierungen aus den Vergleichsbeispielen D bis F im Gegensatz zu den erfindungsgemäßen Beispielen 10 bis 15 zu keinen stabilen Pulverlacken führen, teilweise beim Herstellprozeß in Reaktion treten und beim Einbrennprozeß nicht aufschmelzen bzw. stumpfmatte Oberflächen erzeugen.

### Beispiele 16 und 17

Aus folgenden Komponenten werden Klarlacke bereitet: (Angaben in Gew.-Teilen)

| | | |
|---|---|---|
| Komponenten | 16 | 17 |
| Beispiel 8 | 71,9 | - |
| Beispiel 9 | - | 71,9 |
| Polyisocyanat III | 26,1 | 26,1 |
| Katalysator Hostanox ZNCS | 1,0 | 1,0 |
| Zusatzmittel Perenol F30P | 1,0 | 1,0 |

Zur Bereitung der Pulverlacke werden die Komponenten mit Hilfe eines Extruders, Buss-Co-Kneter, PLK 46, bei 150 U/min, einer Gehäusetemperatur von 20°C/60°C, einer Wellentemperatur von 15°C und einer Austrittstemperatur von ca. 95°C extrudiert und die erhaltenen Granulate mit Hilfe einer Sichtermühle ACM2 (Fa. Hosokawa Mikropul) gemahlen und mit einem 20 µm Sieb gesiebt.

Von diesen Pulverlacken werden, sowohl unmittelbar nach ihrer Herstellung, als auch nach 3-monatiger Lagerung bei Raumtemperatur folgende Gelierzeiten bestimmt.

| | | |
|---|---|---|
| | 16 | 17 |
| Gelierzeit frisch/s | | |
| 180°C | 120 | 139 |
| Gelierzeit nach 3-monatiger Lagerung bei Raumtemperatur/s | | |
| 180°C | 101 | 119 |

Mit den erfindungsgemäßen Pulverlacken entsprechend den Beispielen 16 und 17 werden entfettete Stahlbleche beschichtet und im Gradientenofen 30 Minuten bei 150°C/160°C/170°C eingebrannt. Die Schichtdicken betragen 60 ± 5 µm. Es werden gut verlaufene Filme mit folgenden Prüfergebnissen erhalten.

| | | |
|---|---|---|
| | 16 | 17 |
| Erichsentiefung | | |
| 30 min 150°C | 0,3 | 0,3 |
| 30 min 160°C | 4,6 | 1,0 |
| 30 min 170°C | 4,6 | 4,1 |
| Acetonfestigkeit | | |
| 30 min 150°C | 1 | 0-1 |
| 30 min 160°C | 0-1 | 0-1 |
| 30 min 170°C | 0 | 0 |

### Beispiele 18 bis 23 und Vergleichsbeispiele G bis I (Verwendung)

Die Beispiele 18 bis 23 belegen für sechs erfindungsgemäße pigmentierte Pulverlackformulierungen die anhand der Gelierzeiten beobachteten guten Lagerstabilitäten der Pulverlacke bei Raumtemperatur sowie die daraus hergestellten acetonfesten, glänzenden Beschichtungen mit Erichsentiefungswerten bis 8,0 mm.

Die Vergleichsbeispiele G bis I belegen anhand der Gelierzeiten im Gegensatz zu den Beispielen 18 bis 23 die Instabilität der Pulverlacke.

Aus folgenden Komponenten werden pigmentierte Pulverlacke bereitet (Angaben in Gew.-Teilen):

| | Beispiele | | | | | | Vergleichsbeispiele | | |
|---|---|---|---|---|---|---|---|---|---|
| Komponenten | 18 | 19 | 20 | 21 | 22 | 23 | G | H | I |
| Beispiel 1 | 47,6 | - | 48,0 | - | 63,0 | - | - | - | - |
| Beispiel 3 | - | 47,6 | - | 48,0 | - | 63,0 | - | - | - |
| Vergleichsbeispiel A | - | - | - | - | - | - | 47,6 | 48,0 | 63,0 |
| Polyisocyanat III | 16,4 | 16,4 | - | - | - | - | 16,4 | - | - |
| Polyisocyanat I | - | - | 16,0 | 16,0 | 21,0 | 21,0 | - | 16,0 | 21,0 |
| Zusatzmittel ®Modaflow P III*) | 1,0 | 1,0 | 1,0 | 1,0 | 1,0 | 1,0 | 1,0 | 1,0 | 1,0 |
| TiO₂-Pigment ®Bayertitan R-UB-4**) | 35,0 | 35,0 | 35,0 | 35,0 | - | - | 35,0 | 35,0 | - |
| ®Ruß-FW-2***) | - | - | - | - | 1,5 | 1,5 | - | - | 1,5 |
| ®Blanc fix micro ****) | - | - | - | - | 13,5 | 13,5 | - | - | 13,5 |

| | | | | | | | | | |
|---|---|---|---|---|---|---|---|---|---|
| *) ®Modaflow P III ist ein handelsübliches Verlaufsmittel auf Basis eines Butylacrylatcopolymeren, Hersteller: Fa. Monsanto | | | | | | | | | |
| **) Hersteller: Bayer AG | | | | | | | | | |
| ***) Hersteller: Degussa, Frankfurt | | | | | | | | | |
| ****) Hersteller: Sachtleben, Duisburg | | | | | | | | | |

Zur Bereitung der pigmentierten Pulverlacke werden die Komponenten mit Hilfe eines Extruders, Buss Co-Kneter PLK 46, bei 150 U/min, einer Gehäusetemperatur von 70°C/100°C, einer Wellentemperatur von 70°C und einer Austrittstemperatur von ca. 120°C extrudiert und die erhaltenen Granulate mit Hilfe einer Sichtermühle ACM 2 (Fa. Hosokawa Mikropul) mit einem 90 µm-Sieb gemahlen und gesiebt.

Von diesen Pulverlacken werden, sowohl unmittelbar nach ihrer Herstellung als auch nach 3-monatiger Lagerung bei Raumtemperatur folgende Gelierzeiten bestimmt:

| | Beispiele | | | | | | Vergleichsbeispiele | | |
|---|---|---|---|---|---|---|---|---|---|
| Komponenten | 18 | 19 | 20 | 21 | 22 | 23 | G | H | I |
| Gelierzeit frisch/s | | | | | | | | | |
| 180°C | 286 | 449 | 354 | >600 | 559 | >600 | 41 | 72 | 121 |

| Gelierzeit nach 3- monatiger Lagerung bei Raumtemperatur/s | | | | | | | | | |
|---|---|---|---|---|---|---|---|---|---|
| 180°C | 256 | 428 | 319 | >600 | 538 | >600 | sofort | sofort | 34 |

Mit den erfindungsgemäßen Pulverlacken entsprechend den Beispielen 22 und 23 werden entfettete Stahlbleche beschichtet und im Gradientenofen 30 Minuten bei 160°C/170°C/180°C eingebrannt. Die Schichtdicken betragen 60 ± 5 µm. Es werden folgende Prüfergebnisse erhalten.

| | Beispiele | |
|---|---|---|
| | 22 | 23 |
| Erichsentiefung | | |
| 30 min 160°C | 0,5 | 0,4 |
| 30 min 170°C | 4,3 | 0,5 |
| 30 min 180°C | 8,0 | 6,5 |

| Acetonfestigkeit | | |
|---|---|---|
| 30 min 160°C | <50 | <50 |
| 30 min 170°C | 1-2 | <50 |
| 30 min 180°C | 0-1 | 2 |

| Glanz 20° | | |
|---|---|---|
| 30 min 160°C | 76 | 81 |
| 30 min 170°C | 79 | 76 |
| 30 min 180°C | 74 | 75 |

## Patentansprüche

1. Pulverlack zur Herstellung von vergilbungsfreien elastischen Beschichtungen aus
A) einem unterhalb 30°C festen und oberhalb 120°C flüssigen Bindemittelgemisch aus
A1) einer Polyisocyanatkomponente, bestehend aus mindestens einem Lackpolyisocyanat mit freien, an primäre und/oder sekundäre Kohlenstoffatome gebundenen Isocyanatgruppen,
A2) einer Polyolkomponente,
wobei das Bindemittelgemisch durch Abmischen der Einzelkomponenten unter Einhaltung eines Äquivalentverhältnisses von Isocyanatgruppen zu Hydroxylgruppen von 0,6:1 bis 1,2:1, gegebenenfalls unter kurzzeitigem Erhitzen, hergestellt worden ist,
gegebenenfalls
B) Katalysatoren für die Reaktion zwischen Hydroxyl- und Isocyanatgruppen
und gegebenenfalls
C) aus der Pulverlacktechnologie bekannten Hilfs- und Zusatzmitteln,
dadurch gekennzeichnet, daß
die Polyisocyanatkomponente A1) einen NCO-Gehalt von 5,0 bis 23 Gew.-% bei einer mittleren NCO-Funktionalität von mindestens 2,1 und einem Gehalt an monomeren Diisocyanaten eines unter 300 liegenden Molekulargewichts von unter 0,5 Gew.-% aufweist und
die Polyolkomponente A2) aus mindestens einer Polyhydroxylverbindung, ausgewählt aus der Gruppe bestehend aus Polyhydroxypolyurethanen, Polyhydroxypolyacrylaten und Polyhydroxypolyestern, jeweils mit einer OH-Zahl von 30 bis 200, besteht, wobei die in der Komponente A2) vorliegenden Hydroxylgruppen zu mindestens 50 % an sekundäre oder tertiäre Kohlenstoffatome gebunden sind.

2. Pulverlack gemäß Anspruch 1, dadurch gekennzeichnet, daß die Polyisocyanatkomponente A1) einen NCO-Gehalt von 12 bis 18 Gew.-% bei einer mittleren NCO-Funktionalität von mindestens 2,4 aufweist und aus mindestens einem Isocyanuratgruppen aufweisenden Polyisocyanat besteht.

3. Pulverlack gemäß Anspruch 1 und 2, dadurch gekennzeichnet, daß die Polyisocyanatkomponente A1) aus mindestens einem Isocyanuratgruppen aufweisenden Polyisocyanat besteht, welches durch Teiltrimerisierung der Isocyanatgruppen eines Diisocyanats oder Diisocyanatgemischs, bestehend zu 70 bis 100 Gew.-% aus 1-Isocyanato-3,3,5-trimethyl-5-isocyanatomethyl-cyclohexan und/oder 4,4'-Diisocyanatodicyclohexylmethan und zu 0 bis 30 Gew.-% aus Hexamethylendiisocyanat und anschließende Abtrennung von nicht umgesetztem Ausgangsdiisocyanat oder durch Abmischung von entsprechenden Mengen entsprechender Homotrimerisate erhalten worden ist.

4. Pulverlack gemäß Anspruch 1 bis 3, dadurch gekennzeichnet, daß die Polyolkomponente A2) zu mindestens 50 Gew.-% aus Polyhydroxypolyurethanen mit einer Glasübergangstemperatur Tg von 30 bis 120°C besteht, wobei mindestens 70 % der in der Komponente A2) vorliegenden Hydroxylgruppen an sekundäre oder tertiäre Kohlenstoffatome gebunden sind.

5. Pulverlack gemäß Anspruch 4, dadurch gekennzeichnet, daß die Polyolkomponente A2) ausschließlich aus Polyhydroxypolyurethanen besteht.

6. Verwendung der Pulverlacke gemäß Anspruch 1 bis 5 zur Beschichtung beliebiger hitzeresistenter Substrate.

7. Verwendung gemäß Anspruch 6 als Automobilklarlack.

## Claims

1. Powder coating for the production of non-yellowing, resilient coatings from
A) a binder mixture which is solid below 30°C and liquid above 120°C prepared from
A1) a polyisocyanate component consisting of at least one lacquer polyisocyanate having free isocyanate groups attached to primary and/or secondary carbon atoms,
A2) a polyol component
wherein the binder mixture has been produced by blending the individual components while maintaining an equivalent ratio of isocyanate groups to hydroxyl groups of 0.6:1 to 1.2:1, optionally with brief heating,
optionally
B) catalysts for the reaction between hydroxyl and isocyanate groups
and optionally
C) auxiliary substances and additives known from powder coatings technology
characterised in that
the polyisocyanate component A1) has an NCO content of 5.0 to 23 wt.% at an average NCO functionality of at least 2.1 and a content of monomeric diisocyanates of a molecular weight of below 300 of below 0.5 wt.% and
polyol component A2) consists of at least one polyhydroxyl compound selected from the group consisting of polyhydroxypolyurethanes, poylhydroxypolyacrylates and polyhydroxypolyesters, each having an OH value of 30 to 200, wherein at least 50% of the hydroxyl groups present in component A2) are attached to secondary or tertiary carbon atoms.

2. Powder coating according to claim 1, characterised in that the polyisocyanate component A1) has an NCO content of 12 to 18 wt.% at an average NCO functionality of at least 2.4 and consists of at least one polyisocyanate containing isocyanurate groups.

3. Powder coating according to claims 1 and 2, characterised in that polyisocyanate component A1) consists of at least one polyisocyanate containing isocyanurate groups, which polyisocyanate has been obtained by partial trimerisation of the isocyanate groups of a diisocyanate or diisocyanate mixture, consisting of 70 to 100 wt.% of 1-isocyanato-3,3,5-trimethyl-5-isocyanatomethylcyclohexane and/or 4,4'-diisocyanatodicyclohexylmethane and 0 to 30 wt.% of hexamethylene diisocyanate, and subsequent separation of unreacted starting diisocyanate or by blending appropriate quantities of corresponding homotrimers.

4. Powder coating according to claims 1 to 3, characterised in that the polyol component A2) consists of at least 50 wt.% of polyhydroxypolyurethanes having a glass transition temperature T_{g} of 30 to 120°C, wherein least 70% of the hydroxyl groups present in component A2) are attached to secondary or tertiary carbon atoms.

5. Powder coating according to claim 4, characterised in that polyol component A2) consists solely of polyhydroxypolyurethanes.

6. Use of the powder coatings according to claims 1 to 5 for coating any desired heat-resistant substrates.

7. Use according to claim 6 as an automotive clear lacquer.

## Revendications

1. Laque, vernis ou peinture pulvérulent pour la préparation d'enductions élastiques exemptes de jaunissement, constitué par
A) un mélange de liants solides à une température inférieure à 30°C et liquide à une température supérieure à 120°C, constitué par
A1) un composant de polyisocyanate constitué par au moins un polyisocyanate de laque, de vernis ou de peinture contenant des groupes isocyanate libres liés à des atomes de carbone primaires et/ou secondaires,
A2) un composant de polyol,
dans lequel le mélange de liants a été préparé par mélangeage des composants individuels en maintenant un rapport d'équivalents des groupes isocyanate aux groupes hydroxyle de 0,6:1 à 1,2:1, le cas échéant en chauffant pendant un bref moment,
le cas échéant
B) des catalyseurs pour la réaction entre les groupes hydroxyle et les groupes isocyanate,
et le cas échéant
C) des adjuvants et des additifs connus de la technologie des laques, des vernis ou des peintures pulvérulents,
caractérisé en ce que
le composant de polyisocyanate A1) présente une teneur NCO de 5,0 à 23% en poids à une fonctionnalité NCO moyenne d'au moins 2,1 et une teneur en diisocyanates monomères possédant un poids moléculaire inférieur à 300, inférieure à 0,5% en poids, et
le composant de polyol A2) est constitué d'au moins un composé polyhydroxylé choisi parmi le groupe constitué par des polyhydroxypolyuréthannes, par des polyhydroxypolyacrylates et par des polyhydroxypolyesters possédant respectivement un indice OH de 30 à 200, dans lequel les groupes hydroxyle présents dans le composant A2) sont liés jusqu'à concurrence d'au moins 50% à des atomes de carbone secondaires ou tertiaires.

2. Laque, vernis ou peinture pulvérulent selon la revendication 1, caractérisé en ce que le composant de polyisocyanate A1) présente une teneur NCO de 12 à 18% en poids à une fonctionnalité NCO moyenne d'au moins 2,4 et est constitué d'au moins un polyisocyanate présentant des groupes isocyanurate.

3. Laque, vernis ou peinture pulvérulent selon les revendications 1 et 2, caractérisé en ce que le composant de polyisocyanate A1) est constitué par au moins un polyisocyanate présentant des groupes isocyanurate, que l'on a obtenu via trimérisation partielle des groupes isocyanate d'un diisocyanate ou d'un mélange de diisocyanates constitué, jusqu'à concurrence de 70 à 100% en poids, par le 1-isocyanato-3,3,5-triméthyl-5-isocyanatométhyl-cyclohexane et/ou par le 4,4'-diisocyanatodicyclohexyl-méthane, et jusqu'à concurrence de 0 à 30% en poids, par l'hexaméthylènediisocyanate, et via élimination ultérieure du diisocyanate de départ n'ayant pas réagi ou encore via mélangeage de quantités correspondantes d'homotrimères correspondants.

4. Laque, vernis ou peinture pulvérulent selon les revendications 1 à 3, caractérisé en ce que le composant de polyol A2) est constitué, jusqu'à concurrence d'au moins 50% en poids, par des polyhydroxypolyuréthannes possédant une température de transition vitreuse Tg de 30 à 120°C, dans lequel au moins 70% des groupes hydroxyle présents dans le composant A2) sont liés à des atomes de carbone secondaires ou tertiaires.

5. Laque, vernis ou peinture pulvérulent selon la revendication 4, caractérisé en ce que le composant de polyol A2) est constitué exclusivement par des polyhydroxypolyuréthannes.

6. Utilisation des laques, des vernis ou des peintures pulvérulents selon les revendications 1 à 5 pour l'enduction de n'importe quel substrat résistant à la chaleur.

7. Utilisation selon la revendication 6, à titre de peinture claire pour des véhicules automobiles.
